# EUROPEAN PATENT APPLICATION

(11) **EP 0 879 856 A1**
(43) Date of publication of application: **25.11.1998**
(21) Application number: 98201708.9
(22) Date of filing: 22.05.1998
(51) Int. Cl.: C09D 5/34, C08K 3/00

(54) **Filler composition based on an unsaturated polyester**

(30) Priority: 22.05.1997 NL 1006115
(71) Applicant: DSM N.V., 6411 TE Heerlen (NL)
(72) Inventor: Udding, Jan Henderikus, 3928 DB Hoogland (NL); Kraeger, Ivo Ronald, 3742 PJ Baarn (NL)

(57) **Abstract**

The invention relates to a filler composition comprising:
(A) an unsaturated polyester;
(B) a monomer that is copolymerizable with the unsaturated polyester (A);
(C) optionally an accelerator;
(D) the usual fillers for a filler composition; and
(E) an initiator, and is characterized in that the filler composition also contains a
(F) water-absorbing compound represented by the formula MₐX_{b}.nH₂O, in which M is a metal and X an oxygen group, a hydroxyl group and/or an anionic group of an inorganic or organic acid, in which a and b are integers larger than or equal to 1 and n is larger than or equal to 0.

## Description

The invention relates to a filler composition comprising (A) an unsaturated polyester; (B) a monomer that is copolymerizable with the unsaturated polyester (A); (C) optionally an accelerator; (D) the usual fillers for a filler composition; and (E) an initiator.

Such a filler composition is known from WO 95/19379, which describes a filler composition based on an unsaturated polyester and a monomer that is copolymerizable with it. The known filler composition shows a reasonable adhesion to metal surfaces and is therefore used for example in repairing car body parts. In such repairs the filler composition is applied to the damaged substrate with the aid of a suitable tool and is then cured in a known manner. The - entirely or partly - cured filler composition is subsequently scoured to obtain the desired surface smoothness and the desired surface profile. It is of the greatest importance that the filler composition permanently adheres to the substrate surface during these operations, but also during the repaired part's further life.

Although the known filler composition as described in WO 95/19379 shows reasonable adhesion to metal surfaces, the adhesion is in many cases insufficient. In particular the adhesion to galvanized metal surfaces is insufficient.

The aim of the present invention is hence to provide a filler composition that shows excellent adhesion to surfaces of for example aluminium, glass, wood, stone, plastic and in particular to metal and galvanized metal surfaces.

The filler composition according to the invention is to this end characterized in that, in addition to the compounds (A) up to and including (E), it also contains a water-absorbing compound (F), represented by the formula MₐX_{b}.nH₂O, in which M is a metal and X an oxygen atom, a hydroxyl group and/or an anionic group derived from an inorganic or organic acid, in which a and b are integers larger than or equal to 1 and n is larger than or equal to 0.

The filler composition according to the invention presents the additional advantage that it possesses excellent flexibility and elasticity and has a high heat deflection temperature, as a result of which a long-lasting adhesion to the substrate surface is obtained.

A 'water-absorbing compound' (F) is in the context of the present application understood to be a compound that is capable of binding water to it. The way in which this bond is established may be of both a physical and a chemical nature.

The compound (F) according to the invention may comprise both hydrated (n ≠ 0) and anhydrous (n=0) metal salts, metal oxides and/or metal hydroxides. n will then generally be an integer or a fraction between 0 and 15. Preferably the compound (F) is chosen such that n lies between 0 and 7, more preferably between 0 and 3.

The filler composition according to the invention is most preferably characterized in that the water-absorbing compound (F) is represented by the formula MₐX_{b}, in which M is a metal and X a anionic group derived from an inorganic or organic acid, and in which a and b are integers larger than or equal to 1.

Suitable metals M in the water-absorbing compound (F) belong to groups 1 up to and including 15 of the Periodic System of the Elements (new IUPAC version as given in the table printed inside the cover of the Handbook of Chemistry and Physics, 70th Edition, CRC Press, 1989-1990). Examples of suitable metals are alkali metals such as Li, Na, K and Rb of group 1, Cu, Ag and Au of group 11, Mg, Ca, Sr and Ba of group 2, Zn, Cd and Hg of group 12, Sc of group 3 and Al and Ga of group 13, Ti and Zr of group 4, Sn of group 14 and Bi of group 15, and also Cr, Mo and W of group 6, Mn and Tc of group 7 and Fe, Co and Ni of groups 8, 9 and 10, respectively.

Suitable groups X are for example halogens such as F, Cl and Br and groups like SO₄, SO₃, S₂O₆, SiF₆, MoO₄, MnO₄, NO₃, NO₂, ClO₄,ClO₃, ClO, CO₃, HCO₃, CrO₄, IO₃, PO₃, PO₄, HPO₃, HPO₄, H₂PO₄, H₂PO₂, P₂O₇, SiO₃, BO₂, BO₃, B₄O₇ and Fe(CN)₆. The organic acid, from which the anionic group is derived, may be for example a carboxylic acid, such as formic acid, acetic acid, oxalic acid, tartaric acid and benzoic acid, an organic sulphonic acid, such as aminosulphonic acid, xylenesulphonic acid, toluenesulphonic acid, phenolsulphonic acid, benzenesulphonic acid and alkylbenzenesulphonic acid, and an organic phosphoric acid, such as methylphosphoric acid and ethylphosphoric acid.

The water-absorbing compound (F) is preferably a salt, hydroxide and/or oxide of a metal belonging to groups 2, 3, 6, 7, 8, 9, 10, 12, 13, 16 and 17 of the Periodic System of the Elements. Examples of particularly suitable salts are lithium chloride, sodium chloride, potassium chloride, rubidium chloride, calcium chloride, magnesium chloride, barium chloride, copper chloride, zinc chloride, calcium bromide, aluminium fluoride, vanadium chloride, molybdenum chloride, manganese chloride, iron chloride, nickel chloride, calcium sulphide, magnesium phosphate, calcium phosphate, calcium formate, magnesium perchlorate, magnesium sulphate, calcium sulphate, aluminium sulphate, calcium toluene sulphonate, aluminium chloride, tin chloride, magnesium acetate, zinc acetate, aluminium sulphate and aluminium acetate. Examples of particularly suitable hydroxides are aluminium hydroxide, calcium hydroxide, magnesium hydroxide and zinc hydroxide. Examples of suitable oxides are aluminium oxide, Zinc oxide, calcium oxide and barium oxide.

Most preferably the filler composition according to the invention is characterized in that X is a sulphate group and M is calcium and/or magnesium.

In addition to a further improvement of the adhesion, this leads to a filler composition with excellent storage stability.

The compounds (F) according to the invention are commercially available, usually in the form of a powder. Although the weight average particle size d₅₀ of the powder particles of the compound (F) in the filler composition according to the invention is not critical, it is advantageous to choose it to be lower than 50 µm, preferably lower than 10 µm. This leads to a further improvement in the filler composition's processability. The characteristic powder particle size d₅₀ is defined as the size beneath which or at which 50 percent by weight of the powder particle sizes fall.

A further advantage of the filler composition according to the invention is that the adhesion to a metal surface galvanized by means of a hot-dip galvanizing method is substantially better than the adhesion achieved on such surfaces with the known filler composition. Hot-dip galvanizing is a method known to a person skilled in the art for making metal surfaces corrosion-resistant and is for example described in "Feuerverzinkung + Beschichtung = Duplex-System" by K.A. van Oeteren, Bauverlag GmbH, Wiesbaden und Berlin, 1983. Surfaces treated in this manner are generally very difficult to repair using the known filler composition, because the latter adheres insufficiently.

The unsaturated polyester (A) in the filler composition according to the invention is any polyester obtained by reaction of organic compounds containing carboxyl groups and alcohol groups. At least one of the starting compounds then contains unsaturated compounds. Unsaturated polyesters generally consist of one or more aliphatic and/or cycloaliphatic, mono-, di- and/or polyvalent alcohols and one or more aliphatic, cycloaliphatic and/or aromatic di- or polyvalent carboxylic acids and, optionally, monocarboxylic acids and/or the esters and anhydrides derived therefrom.

Suitable alcohols preferably contain fewer than 30 carbon atoms. Examples of suitable alcohols are benzyl alcohol, ethylene glycol, diethylene glycol, triethylene glycol, propylene glycol, dipropylene glycol, neopentyl glycol, butane diol, pentane diol, hexane diol, dimethylol cyclohexane, glycerol, trimethylolpropane, pentaerythritol, dipentaerythritol, hydrated bisphenol A, 2,2-bis-(2-hydroxyethoxy)phenylpropane and/or 2,2-bis-(2-hydroxypropoxy) phenylpropane. Instead of or in addition to the alcohol compound(s) one or more epoxy compounds, such as ethylene oxide, propylene oxide and/or allylglycidyl ether or dicyclopentadiene can be used.

Examples of suitable di- or polyvalent carboxylic acids are fumaric acid, maleic acid, chloromaleic acid, itaconic acid, citraconic acid, malonic acid, succinic acid, glutaric acid, methylglutaric acid, adipic acid, sebacic acid, 1,4-cyclohexane dicarboxylic acid, phthalic acid, isophthalic acid, terephthalic acid, trimellitic acid, dihydrophthalic acid, tetrahydrophthalic acid, hexahydrophthalic acid, tetrachlorophthalic acid, endomethylene tetrahydrophthalic acid (HIMIC), hexachloroendomethylene tetrahydrophthalic acid and/or the corresponding esters or anhydrides. The unsaturated carboxylic acids to be used are preferably ethylenically unsaturated carboxylic acids, in particular α,β-ethylenically unsaturated carboxylic acids.

A class of unsaturated polyesters that are particularly suitable for the filler composition according to the invention consists of the polyesters containing HIMIC units. 'HIMIC' is here understood to include also alkyl-HIMIC, for example methyl-HIMIC. Such polyesters can be obtained directly from endomethylene tetrahydrophthalic acid or the corresponding anhydride and a suitable alcohol. It is however also possible to prepare these polyesters by using dicyclopentadiene (DCPD) as a starting product. The use of DCPD in the preparation of unsaturated polyesters containing HIMIC units is known to a person skilled in the art and is for example described in "Development of dicyclopentadiene-modified resins and their usage as paint binders" by W. Freitag et al. in "Progress in Organic Coatings, 20 (1992), pp. 273-287", which reference is explicitly included in the present application. In such preparation methods DCPD units are first cracked at temperatures between 160°C and 220°C to form cyclopentadiene (CPD) monomeric units, which are subsequently added onto an unsaturated carboxylic acid and/or the corresponding anhydride via a Diels-Alder reaction mechanism, thus forming HIMIC units. The HIMIC units formed are subsequently esterified with a suitable alcohol. It is also possible to first form an unsaturated polyester from the alcohol and carboxylic acid and then subject the already incorporated unsaturated carboxylic acid units to the same Diels-Alder reaction as described above by adding DCPD units at temperatures between 160°C and 220°C.

An unsaturated polyester that is particularly suitable for the filler composition according to the invention has been obtained from 10-50 mol% α,β-ethylenically unsaturated diacid and/or anhydride, 10-50 mol% endomethylene tetrahydrophthalic acid (HIMIC) and 40-60 mol% of a suitable dialcohol.

Most preferably the unsaturated polyester has been obtained from 15-35 mol% α,β-ethylenically unsaturated diacid and/or anhydride, 15-35 mol% HIMIC and 45-55 mol% of a suitable dialcohol.

According to a preferred embodiment of the invention the unsaturated polyester contains as carboxylic acid units fumaric acid, maleic acid, HIMIC and/or orthophthalic acid. As the alcohol use is preferably made of ethylene glycol, diethylene glycol, triethylene glycol, propylene glycol and/or dipropylene glycol.

The unsaturated polyester may be both amorphous and crystalline.

Other polyesters suitable for the filler composition according to the invention are the vinyl ester polymers. Vinyl ester polymers, also known as epoxy (meth)acrylates, are the addition products of polyepoxides and unsaturated carboxylic acids, preferably acrylic acid and methacrylic acid, optionally substituted with C2-C4 alkyl groups. Suitable polyepoxides are epoxy novolak resins and in particular polyepoxides based on bisphenol A. Another class of vinyl ester polymers that are suitable consists of the esterification products of alkoxylated bisphenol A with (meth)acrylic acid.

Other polyesters suitable for the filler composition according to the invention are the vinyl ester urethane polymers. Vinyl ester urethane polymers, also known as urethane (meth)acrylates, are the addition products of a polyvalent isocyanate, a polyvalent alcohol and/or amine and a hydroxyalkyl (meth)acrylate.

The monomer (B) that is copolymerizable with the polyester contains one or more vinyl groups and usually fewer than 50 carbon atoms. Suitable monomers are for example of a vinyl-aromatic, vinyl-ether, vinyl-ester, (meth)acrylate and/or allyl type. Preferably the monomer is vinyl-aromatic.

Vinyl-aromatic monomers have for example been chosen from the group comprising styrene, α-methylstyrene, o-, m-, p-methylstyrene, p-chlorostyrene, t-butylstyrene, divinyl benzene, bromostyrene, vinyl naphthalene, α-chlorostyrene and divinyl naphthalene. Preferably styrene is used.

(Meth)acrylate compounds are for example chosen from the group comprising methyl, ethyl, propyl, isopropyl, butyl, isobutyl, phenyl and benzyl acrylate or methacrylate, 2-ethylhexyl (meth)acrylate, dihydrocyclopentadiene acrylate, cyclohexyl (meth)acrylate, butane diol (meth)acrylate, butane diol di(meth)acrylate, (meth)acrylamide, the reaction products of (meth)acrylic acid and phenyl or cresyl glycidyl ethers, propylene glycol di(meth)acrylate, di- and triethylene glycol di(meth)acrylate, di- and tripropylene glycol di(meth)acrylate, hexane diol di(meth)acrylate and trimethylolpropane tri(meth)acrylate. Preferably use is made of hydroxyethylmethacrylate and hydroxypropylmethacrylate.

Vinyl ether, vinyl ester and allyl compounds are for example chosen from the group comprising allyl phthalate, diallylphthalate, diallylisophthalate, triallylcyanurate, diallylterephthalate, vinyl acetate, vinyl propionate, vinyl pivalate, vinyl ether, vinyl versatate, vinyl propylol ether, divinyl ether, vinyl butylol ether and vinyl benzyl alcohol ethers.

If the filler composition is to be cured at relatively low temperatures, for example at room temperature, the filler composition according to the invention may optionally contain an accelerator (C). Suitable accelerators are for example tertiary amines and/or metal salts, which are added to the filler composition in relatively small amounts, preferably in weight amounts of 0.01 to 2 wt.%. Suitable metal salts are for example zirconium carboxylates, manganese carboxylates and cobalt octoate or cobalt naphthenate. Suitable amines are for example aniline derivatives and N,N-bisalkylarylamines, such as N,N-dimethylaniline, N,N-diethylaniline, N,N-dimethylparatoluidine, N,N-bis(hydroxyalkyl)arylamine, N,N-bis(β-hydroxyethyl)aniline, N,N-bis(β-hydroxyethyl)toluidine, N,N-bis(γ-hydroxypropyl)aniline and N,N-bis(β-hydroxypropyl)toluidine. Accelerators that are also suitable are polymeric amines, for example obtained from polycondensation of N,N-bis(β-hydroxyethyl)aniline with a dicarboxylic acid.

The filler composition according to the invention may optionally contain one or more inhibitors in an amount between 0.005 and 0.2 wt.%, preferably between 0.01 and 0.1 wt.% relative to the total weight of components (A),(B),(C) and (E). Inhibitors that are suitable for use are for example hydroquinone, 2,6-dimethyl hydroquinone, 2,5-di-tert-butyl hydroquinone, tert-butyl catechol, benzoquinone, chloranil, naphthoquinone, phenothiazine, copper naphthenate and thiodiphenylamine.

The filler composition according to the invention furthermore contains the usual fillers for filler compositions (D). Suitable fillers are for example kaolin, heavy spar, shale powder, talcum, aluminium trihydrate, sand and optionally pigments and colourants can be present in the filler composition. Reinforcing materials may also be added to the filler composition. Suitable reinforcing materials are for example hollow or solid glass beads, plate-shaped materials such as mica and/or reinforcing fibres such as glass fibres, carbon fibres, sisal and jute fibres and steel fibres. An additional advantage of the filler composition according to the invention is that the reinforcing effect of such reinforcing materials is better than that of the known filler composition. At the same reinforcing fibres content, a filler composition according to the invention filled with reinforcing fibres for example shows higher mechanical stiffness and strength than the corresponding known filler composition. It is also possible to add thixotropic agents such as colloidal silica, highly reactive silicic acids, bentones, and hydrogenated oils, such as castor oil, to the filler composition.

Preferably the amount of fillers (D) is from 40 to 80 wt.% relative to the filler composition's total weight. Most preferably this is from 50 to 70 wt.%.

The curing of the filler composition is initiated by an initiator (E). Suitable initiators are free-radical-forming peroxides such as, for example, diacylperoxides, hydroperoxides, percarbonates and mixtures hereof. Suitable diacylperoxides are for example diacetylperoxide, dibenzoylperoxide, di-p-chlorobenzoylperoxide, phthaloylperoxide, succinylperoxide, dilaurylperoxide and acetylcyclohexane sulphonylperoxide. Suitable hydroperoxides are for example methylethylketone peroxide, t-butylhydroperoxide, t-butylperbenzoate, cyclohexanone peroxide and cumene hydroperoxide. Suitable percarbonates are for example cyclohexane percarbonate and bis-(4-tert-butylcyclohexyl) percarbonate.

If the filler composition contains an amine as the accelerator (C) use is preferably made of a diacylperoxide, in particular dibenzoylperoxide. If the filler composition contains a metal salt as the accelerator (C) use is preferably made of a hydroperoxide, in particular cyclohexanone peroxide.

It is also possible to use UV-curable initiators. Examples of such initiators are unimolecular photoinitiators which form reactive radicals by means of α-cleavage and bimolecular photoinitiators which form reactive radicals by means of hydrogen abstraction. Examples of suitable unimolecular photoinitiators are hydroxycyclohexyl phenylketone, benzoin ethers, acylphosphine oxides and acylphosphonates. Examples of suitable bimolecular photoinitiators are benzophenone derivatives combined with tertiary aliphatic amines, such as benzophenone with N,N-dimethylethanolamine, and thioxanthone derivatives combined with tertiary aromatic amines, such as thioxanthone with ethyl-4-dimethylaminobenzoate.

The amount of water-absorbing compound (F) in the filler composition according to the invention may be chosen within a wide range. A suitable amount is for example from 0.1 to 50 wt.% relative to the total weight of components (A) up to and including (F) of the filler composition. Preferably the amount of water-absorbing compound (F) is from 0.5 to 10 wt.% relative to the total weight of (A) up to and including (F). Most preferably it is from 2 to 5 wt.% relative to the total weight of (A) up to and including (E). In addition to excellent adhesion to galvanized steel, the latter preferred embodiment has very good processability. 'Very good processability' is understood to mean that the filler composition can be easily spread out, without the formation of lines, on a surface to be repaired, that it has the viscosity required for a filler composition and that it is easy to wet the surface to be repaired with the filler composition.

The invention will now be elucidated further with reference to the following examples, without however being limited hereto.

### Examples I - VIII and Comparative Example A

### Starting materials

- UP: Synolite™ 6494-U-1, a polyester resin, dissolved in 36 wt.% styrene and pre-accelerated with an amine (C), obtainable from DBSR in the Netherlands.
- St: Styrene monomer.
- D1: Thixcin™ E, a thixotropic agent obtainable from Rheox Europe, Brussels, Belgium.
- D2: Aerosil™ 200, a thixotropic agent obtainable from Finnminerals, Finland.
- D3: Kronos™ 2160, a titanium dioxide obtainable from NL-Chemicals, the Netherlands.
- D4: Norwegian Talc™ type FGT 200, obtainable from Norwegian Talc, Norway.
- D5: Barium sulphate type EWO, a density-increasing filler obtainable from Deutsche Baryt Industrie, Germany.
- F1: Anhydrous magnesium sulphate, obtainable from Aldrich, of Zwijndrecht, the Netherlands.
- F2: Anhydrous calcium sulphate, obtainable from Aldrich, of Zwijndrecht, the Netherlands.

Of the aforementioned starting materials 320 parts by weight of UP, 6.4 parts by weight of D1, 6.4 parts by weights of D2, 50 parts by weight of D3 and 450 parts by weight of D4 were mixed with a number of parts by weight of St, D5, F1 and F2, as indicated in Table 1. The mixing was done with the aid of a Dispermat-type dispersing mixer (from VMA-Getzmann, Germany) for 15 minutes at a maximum temperature of 50°C.

**Table 1**

| parts by weight of the filler components | | | | |
|---|---|---|---|---|
| Example | D5 | F1 | F2 | St |
| I | 145 | 5 | - | 27 |
| II | 140 | 10 | - | 29 |
| III | 135 | 15 | - | 31 |
| IV | 130 | 20 | - | 33 |
| V | 125 | 25 | - | 35 |
| VI | 120 | 30 | - | 37 |
| VII | 100 | 50 | - | 39 |
| VIII | 100 | - | 50 | 39 |
| A | 150 | | | 25 |

100 g of the filler composition obtained was subsequently mixed with 2 g of (E), a 50% benzoylperoxide paste (Lucidol™ BT-50 from Akzo, the Netherlands).

This mixture was subsequently applied in a layer with a thickness of approximately 1 mm to galvanized steel plates with a length of 250 mm, a width of 80 mm and a thickness of 1 mm. The plates were obtained from Metavo, of Leiden, the Netherlands. Before the mixture was applied, the galvanized plates were degreased with the aid of a 50/50 mixture of acetone and toluene and lightly scoured using #80 grit sandpaper.

After the 1-mm-thick layer of the mixture had been applied to the galvanized plates this layer was cured for 90 minutes at 20°C (El-20°C and HD-20°C) or for 30 min. at 20°C, followed by 60 min. at 80°C (El-80°C and HD-80°C).

The adhesion of the layer to the galvanized plates was determined by bending the plates through an angle of 90 degrees against a stop. The level of adhesion was determined on the basis of the amount of filler composition remaining on the plate. The level of adhesion was assigned a scale as described below:

| Scale | Amount of filler remaining |
|---|---|
| 0 | very large amount |
| 1 | large amount |
| 2 | residues |
| 3 | small amount |
| 4 | very small amount |
| 5 | none |

The results of the determination of the level of adhesion are given in Table 2.

**Table 2**

| Results of adhesion test | | | | |
|---|---|---|---|---|
| Example | El-20°C | El-80°C | HD-20°C | HD-80°C |
| I | 0 | 0 | 4 | 4 |
| II | 0 | 0 | 4 | 4 |
| III | 0 | 0 | 1 | 3 |
| IV | 0 | 0 | 1 | 1 |
| V | 0 | 0 | 0 | 0 |
| VI | 0 | 0 | 0 | 0 |
| VII | 0 | 0 | 0 | 0 |
| VIII | 0 | 0 | 0 | 0 |
| A | 5 | 5 | 5 | 5 |
| El - 20°C : Electrolytically galvanized steel, cured at 20°C El - 80°C : Electrolytically galvanized steel, cured at 20/80°C HD - 20°C : Hot-Dip galvanized steel, cured at 20°C HD - 80°C : Hot-Dip galvanized steel, cured at 20/80°C | | | | |

The results show that the filler composition according to the invention shows an excellent adhesion to both electrolytically and hot-dip galvanized steel surfaces.

## Claims

1. Filler composition comprising:
(A) an unsaturated polyester;
(B) a monomer that is copolymerizable with the unsaturated polyester (A);
(C) optionally an accelerator;
(D) the usual fillers for a filler composition; and
(E) an initiator, characterized in that the filler also contains a water-absorbing compound (F) represented by the formula MₐX_{b}.nH₂O, in which M is a metal and X an oxygen atom, a hydroxyl group and/or an anionic group of an inorganic or organic acid, in which a and b are integers larger than or equal to 1 and n is larger than or equal to 0.

2. Filler composition according to Claim 1, characterized in that the inorganic water-absorbing compound (F) is represented by the formula MₐX_{b}, in which M is a metal and X an oxygen group, a hydroxyl group and/or an anionic group of an inorganic or organic acid and in which a and b are integers larger than or equal to 1.

3. Filler composition according to Claim 1 or Claim 2, characterized in that X is a sulphate group.

4. Filler composition according to any one of Claims 1-3, characterized in that M is calcium and/or magnesium.

5. Filler composition according to any one of Claims 1-4, characterized in that the amount of water-absorbing compound (F) is between 0.5 and 10 wt.% relative to the total weight of components (A) up to and including (E).

6. Filler composition according to any one of Claims 1-5, characterized in that the amount of water-absorbing compound (F) is between 2 and 5 wt.% relative to the total weight of components (A) up to and including (E).

7. Filler composition according to any one of Claims 1-6, characterized in that the unsaturated polyester (A) has been obtained from 15-35 mol% α,β-ethylenically unsaturated diacid and/or anhydride, 15-35 mol% endomethylene tetrahydrophthalic acid (HIMIC) and 45-55 mol% of a suitable dialcohol.

8. Filler composition according to Claim 7, characterized in that the α,β-ethylenically unsaturated diacid has been chosen from the group comprising fumaric acid, maleic acid and/or orthophthalic acid or the corresponding anhydride, and the dialcohol has been chosen from the group comprising ethylene glycol, diethylene glycol, triethylene glycol, propylene glycol and/or dipropylene glycol.

9. Substrate, entirely or partly coated with a filler composition according to any one of Claims 1-8.

10. Filler Composition as substantially described in the introduction and/or the examples.
